# EUROPEAN PATENT APPLICATION

(11) **EP 0 899 007 A2**
(43) Date of publication of application: **03.03.1999**
(21) Application number: 98115949.4
(22) Date of filing: 25.08.1998
(51) Int. Cl.: B01J 2/00

(54) **Process for producing granular fertilizers and relevant granulating plant**

(30) Priority: 28.08.1997 IT VR970079
(71) Applicant: Bercelli, Gian Maria, 37060 Erbe (Verona) (IT)
(72) Inventor: Bercelli, Gian Maria, 37060 Erbe (Verona) (IT)
(74) Representative: Savi, Alberto

(57) **Abstract**

A process is proposed for producing granular fertilizers having particular physical and chemical properties that permit a slow transfer of nutritious substances to the ground. These granular fertilizers are so homogeneous that optimum results are obtained, especially when treating lawns.

In general, the present process contemplates that raw materials coming from containers (1) according to predetermined doses are poured into a mill (3). Then, the milled material reaches a granulating device (4) to which unmilled urea granules coming from another container (2) are directly and simultaneously conveyed and therefore, the milled material is mixed with the urea granules.

Moreover, additional binders (10) are inserted in the granulating device. These binders may be for instance substances that are chiefly made of lignin, sulphate, starch, bentonite, sulphur, ureic glues.

## Description

The present invention proposes a process for producing granular fertilizers and a granulating plant for obtaining such fertilizers through particular working phases.

In particular, the present invention refers to a productive process for obtaining granular fertilizers having such characteristics of homogeneity to reach optimum results in the treated grounds, in particular lawns.

It is known that in the field of the production of fertilizers different processes are used to obtain various forms of amalgam of the fundamental chemical elements for the fertility of the grounds, which elements consist mostly of nitrogen, phosphorus and potassium.

These fundamental elements are a base for any manuring since such elements are not abundant in nature in respect to the requirements or such elements are present in a form that is not assimilable. These fundamental elements are in general obtained through productive processes producing a granular product to be distributed on different types of ground.

Currently, operative cycles are performed to obtain fertilizers and to produce in particular granular manures. These operative cycles refer to collecting raw materials from containers or silos, introducing the various components in a mill for their mincing in order to obtain a pulverized amalgam to be conveyed to a granulating device.

In the said granulating device, the pulverized product is amalgamated with water and binding substances so as to obtain granules. Then, these granules are dried and sieved. Finally, the granules are sacked at the end of the production cycle.

Moreover, it is known that one of the components that are mainly used in the production of fertilizers is urea. It is common knowledge that urea has the particular properties of being a substance rich in nitrogen and highly hygroscopic.

Urea in its various forms must, therefore, be covered with macroelements, microelements and other chemical substances so that the ureic nitrogen is transferred more slowly to roots of the grass or to the flowering and green plants.

The advantages concerning the so-obtained slower transfer of manure or fertilizer refer to a lower need of fertilizer and as a consequence of this, to a reduced or non-existent pollution of the water-bearing strata.

In addition, when using conventional mixtures of granular manures it is not possible to obtain homogeneous products. However, the non-homogeneous products may determine the presence of regular patches of vegetation.

The purpose of the present invention is to conceive and carry out a process for producing granular manures or fertilizers having such physical and chemical properties to solve the aforesaid inconveniences.

In particular, the present invention proposes a productive process for obtaining a granular manure having properties that permit a slow transfer of nutritious substances to the ground, this granular fertilizer being so homogeneous that optimum results may be obtained, especially when treating lawns.

All the above particular aims and advantages are reached according to the present invention by a process for producing granular manures or fertilizers and by the relevant granulating plant, characterized by the fact that doses of raw materials are supplied from a series of containers and are subjected to a milling process in a mill or the like and to a granulating process in a granulating device and by the fact that at the same time, granules of an ureic substance or the like without being subjected to a milling process and a series of other binding substances or binding additional substances are supplied to the granulating device so that the pulverized raw material may adhere to the surface of each granule of ureic substance to form a protective cover for the same granules.

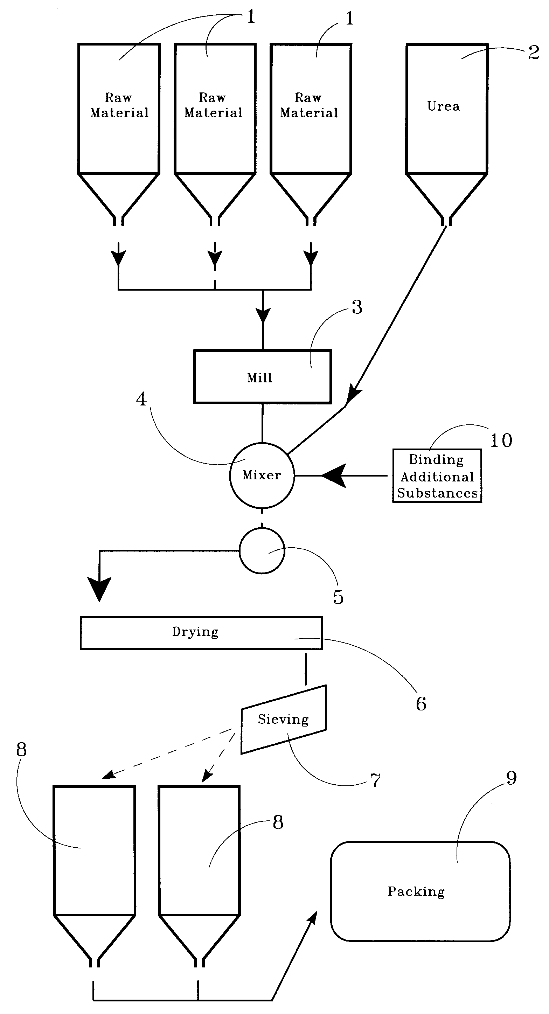

The invention will be better understood from the following description, set forth as a not restrictive example as well as from the accompanying drawing in which the only figure shows a schematic view of an example including the various phases of a process according to the present invention.

With reference to the accompanying drawing, number 1 denotes containers for raw materials. These raw materials are used in the process according to the present invention as in other known processes. Each of the said containers is filled with a different chemical substance. For instance, a container is filled with ammoniacal nitrogen, another container is filled with potassium and another container is filled with phosphorus or magnesium or another fundamental substance for the manuring. Number 2 denotes a container filled with granules made of an ureic substance or the like.

In addition, the process according to the present invention utilizes a mill 3, a granulating device or mixer 4, a shovel plate 5 and other known devices as a dryer 6, a sieve 7 and silos 8 for the finished goods. Finally, the finished goods are conveyed to a packing sector 9.

As it can be seen from the figure, the raw materials are supplied from the containers 1 to the mill 3 in pre-arranged doses and from the mill 3, the milled material passes to the granulating device or mixer 4 while the granules of urea are directly supplied to the granulating device or mixer 4 where they are mixed with the pulverized raw material.

Furthermore, binding additional substances 10 are added to the granulating device or mixer 4. These additional substances may be for instance substances that are chiefly made of lignin, sulphate, starch, bentonite, sulphur, ureic glues.

Once the urea granules have been covered with the raw materials and binding substances, the urea granules are dried, sieved and collected in silos 8. Finally, the granules are drawn from the silos 8 and are conveyed to the packing sector 9 for their packing.

More precisely, the process according to the present invention comprises the following phases.

The different raw materials are weighed according to quantities fixed in formulae of the fertilizers to be produced. Then, the weighed raw materials are sent to the mill and then to a hopper waiting for the granulating phase. The urea granules are weighed in a similar way but they are sent directly to the granulating device or mixer without being subjected to the milling phase.

At this stage, binding substances in liquid or powdered state are added to the urea introduced in the granulating device.

At the same time, the powders of raw materials resulting from the milling phase are added.

The formulae of the binding substances both in powder and in liquid state are constant although they are added in different quantities according to the manure or fertilizer to be produced.

After the granulating phase, the manure or fertilizer is discharged on a shovel plate by which the sphericity of the granules is completed.

Then, the manure is dried on a dryer consisting of a fluid bed, sieved and transferred to different silos according to the dimension of the granule and to the type of manure. Finally, the product is taken out from the silos and is weighed and sacked.

Accordingly, the finished product consists of urea granules showing a homogeneous size and covered with a wrapping made of raw materials such as ammoniacal nitrogen, potassium and phosphorus as well as other binding substances that permit a slow transfer to the ground. Thus, it is possible to obtain a granular fertilizer having properties that permit a slow transfer of nutritious substances to the ground and such a homogeneity to guarantee optimum results in the grounds to be treated.

The present invention concerning a process for producing granular manures has been described and represented according to the preferred solution.

However, other variants may be provided, which variants are technically equivalent to the described parts and phases and are, therefore, to be intended as included in the scope of protection of the present invention.

## Claims

1. Process for producing granular fertilizers and relevant granulating plant, characterized by the fact that doses of raw materials are supplied from a series of containers (1) and are subjected to a milling process in a mill (3) or the like and to a granulating process in a granulating device (4) and by the fact that at the same time granules of an ureic substance or the like without being subjected to a milling process and a series of other binding substances or binding additional substances are supplied to the granulating device (4) so that the pulverized raw material may adhere to the surface of each granule of ureic substance to form a protective cover for the same granules.

2. Process for producing granular fertilizers as claimed in the foregoing claim, characterized by the fact that the ureic granules are weighed and loaded directly in the granulating device (4) without passing through the milling process.

3. Process for producing granular fertilizers as claimed in the foregoing claims, characterized by the fact that the finished product consists of urea granules showing a homogeneous size and covered with a wrapping of raw materials such as ammoniacal nitrogen, potassium and phosphorus as well as other binding materials permitting a slow transfer to the ground, a granular manure being thus obtained with the property of a slow transfer to the ground and such a homogeneity to guarantee optimum results in the soils to be treated.
